Europäisches Patentamt

European Patent Office

Office européen des brevets

(11) Veröffentlichungsnummer: **0 223 129 B1**

(12) # EUROPÄISCHE PATENTSCHRIFT

(45) Veröffentlichungstag der Patentschrift: **21.07.93**

(51) Int. Cl.⁵: **G01S 13/24**, G01S 13/58

(21) Anmeldenummer: **86115069.6**

(22) Anmeldetag: **30.10.86**

(54) **Verfahren zur Entfernungsmessung bei einem Pulsradar hoher Pulsfolgefrequenz.**

(30) Priorität: **16.11.85 DE 3540717**

(43) Veröffentlichungstag der Anmeldung:
**27.05.87 Patentblatt 87/22**

(45) Bekanntmachung des Hinweises auf die
Patenterteilung:
**21.07.93 Patentblatt 93/29**

(84) Benannte Vertragsstaaten:
**DE ES FR GB IT NL SE**

(56) Entgegenhaltungen:
**EP-A- 0 089 284**
**FR-A- 2 412 852**
**FR-A- 2 443 688**
**FR-A- 2 550 347**
**US-A- 3 805 596**

**TECHNICAL NOTES; TN Nr. 900, 20. Dezem-**
**ber 1971, Seiten 1-7, RCA, Princeton, US; H.**
**URKOWITZ: "Block frequency diversity radar**
**technique"**

**"Westinghouse engineer", Seiten 98-105,**
**July 1973,neu aufgelegt in "Radar Applica-**
**tions", M.I. SKOLNIK, IEEE PRESS, 1988, Sei-**
**ten 264-271**

(73) Patentinhaber: **Deutsche Aerospace Aktienge-**
**sellschaft**

**W-8000 München(DE)**

(72) Erfinder: **Borchert, Wolfgang, Dipl.-Phys.**
**Franz-Wiedemeier-Strasse 99**
**W-7900 Ulm(DE)**
Erfinder: **Jehle, Franz, Dipl.-Ing. (FH)**
**Fünf Bäume Weg 148**
**W-7900 Ulm(DE)**
Erfinder: **Rohling, Hermann, Dr. rer. nat.**
**Im Wiblinger Hart 33**
**W-7900 Ulm(DE)**

(74) Vertreter: **Schulze, Harald Rudolf, Dipl.-Ing.**
**Deutsche Aerospace AG Patentabteilung**
**Postfach 17 30**
**W-7900 Ulm (DE)**

EP 0 223 129 B1

**Beschreibung**

Die Erfindung betrifft ein Verfahren zur Entfernungsmessung bei einem Pulsradar hoher Pulsfolgefrequenz gemäß dem Oberbegriff des Patentanspruchs 1.

Die Entfernung zwischen einem Radargerät und den jeweiligen Reflexionsobjekten wird beim Pulsradar in Abhängigkeit des jeweils benutzten Sendesignals durch Zeit- oder Frequenzverschiebungen im Echosignal gemessen. Diese Veränderungen im Echosignal entstehen durch die Signallaufzeit T.

Die Radialgeschwindigkeitskomponente der Ziele wird aus der im Echosignal auftretenden Dopplerfrequenz mit Hilfe von Spektralanalysemethoden ermittelt.

Der für den Sendesignalentwurf wichtige Signalparameter Pulswiederholfrequenz (PRF) bestimmt die jeweiligen Eindeutigkeitsbereiche auf der Entfernungs- und Dopplerfrequenzachse. Beim Pulsradar wird die Zielentfernung i. a. durch die Zeitverschiebung, d. h. durch die Signallaufzeit, im Echosignal gemessen. Wenn c die Lichtgeschwindigkeit und $t_0$ den Pulsabstand beschreibt, dann ist die mit einem Pulsradar maximal eindeutig meßbare Entfernung Rmax gleich

$$Rmax = c/2 \cdot t_0 = c/2 \cdot 1/PRF \qquad (1)$$

und der Eindeutigkeitsbereich Dmax auf der Dopplerfrequenzachse ist direkt durch die PRF bestimmt

$$Dmax = PRF \qquad (2)$$

Aus der in den beiden Gleichungen enthaltenen gegenläufigen Tendenz bezüglich der Größe der Eindeutigkeitsbereiche in Abhängigkeit der PRF ist bereits zu erkennen, daß beim Sendesignalentwurf stets ein Kompromiß bezüglich der PRF getroffen werden muß.

Bodenradarsysteme sind i. a. auf einen großen Entfernungseindeutigkeitsbereich hin ausgelegt und haben deshalb Pulswiederholfrequenzen in der Größenordnung von weniger als 1 kHz und damit einen Entfernungseindeutigkeitsbereich von mehr als 150 km.

Andererseits erreichen moderne Flugzeug-Bordradare die größte Zielentdeckungswahrscheinlichkeit in der Betriebsart (Mode) mit hoher Pulsfolgefrequenz (HPRF) und einer kohärenten Signalauswertung. Der Meßparameter Dopplerfrequenz ist wegen der hohen PRF dann zwar i. a. eindeutig für die interessierenden Fluggeschwindigkeiten, der Entfernungseindeutigkeitsbereich ist jedoch entsprechend klein. Ein Signal mit beispielsweise 200 kHz PRF hat einen Entfernungseindeutigkeitsbereich von 0,75 km. Ein solch kleiner Entfernungseindeutigkeitsbereich ist ohne praktische Relevanz, so daß bei einem solchen Verfahren nur die Dopplerfrequenz, aber keine Entfernungsinformation gewonnen wird.

Zur Entfernungsmessung werden beim sog. Range-Gating im HPRF-Mode mehrere Entfernungszellen eingeführt. Innerhalb der einzelnen Entfernungszellen wird bei konstanter PRF blockweise kohärent integriert. Die Entfernungsinformation wird zunächst relativ genau, aber mehrdeutig, gemessen. Durch eine blockweise Umschaltung der HPRF kann aus mindestens zwei einzelnen mehrdeutigen Entfernungsmessungen ein Entfernungsschätzwert in einem großen Eindeutigkeitsbereich berechnet werden (/1/). Mit einem solchen HPRF-Signal steht eine erhebliche Ausweitung der Radarbandbreite durch die notwendigerweise kürzeren Sendeimpulse und Abtastabstände in Verbindung.

Die Entfernungsinformation kann auch durch ein linear FM-ICW-Sendesignal im HPRF-Mode aus der Frequenzverschiebung der Echosignale gemessen werden. Die Entfernungsauflösung hängt dann vom Hub der Frequenzmodulation ab. Auch hierbei ergibt sich eine Erhöhung der Radarbandbreite und damit eine höhere Anfälligkeit gegenüber Störsignalen.

Aus der Druckschrift "Westinghouse Engineer", Seiten 98-105, Juli 1973; neu aufgelegt in "Radar Applications", M.I. Skolnik IEEE Press 1988, Seiten 264-271 ist ein Flugzeug-Bordradar bekannt. Dieses kann verwendet werden als Pulsdopplerradar hoher Pulsfolgefrequenz (HPRF) mit eindeutiger Messung der Geschwindigkeitsinformation eines Zieles aus dessen Dopplerfrequenz. Dabei wird ein aus einer Mehrzahl aufeinanderfolgender Echosignale gebildeter Signalblock kohärent verarbeitet und aus dem komplexen Empfangssignal des Signalblockes durch Transformation aus dem Zeitbereich in den Frequenzbereich ein zugehöriges komplexes Spektrum gebildet. Für die Entfernungsmessung eines Zieles werden mindestens zwei Pulsfolgen mit unterschiedlichen aber in einem bestimmten, vorgebbaren Verhältnis zueinander stehenden Pulsfolgefrequenzen sequentiell ausgesandt. Aus den zugehörigen empfangenen Pulsfolgen wird die Entfernung des Zieles bestimmt.

Der Erfindung liegt die Aufgabe zugrunde, ein Verfahren zur Entfernungsmessung bei einem Pulsradar hoher Pulsfolgefrequenz anzugeben, welches mit geringem Aufwand und ohne Erhöhung der Anfälligkeit gegen Störsignale realisierbar ist.

EP 0 223 129 B1

Die Erfindung ist im Patentanspruch 1 beschrieben. Vorteilhafte Ausgestaltungen und Weiterbildungen der Erfindung können den Unteransprüchen entnommen werden.

Das erfindungsgemäße Verfahren erfordert gegenüber einem HPRF-Betrieb eines Pulsradars ohne Entfernungsmessung lediglich Maßnahmen bei der Signalauswertung, die bei programmierbaren Radarsignalprozessoren ohne großen Aufwand realisierbar sind, ohne störresistenzvermindernde Anforderungen an Sendesignalmuster oder Empfängerbandbreite zu stellen.

Ohne die Echolaufzeit direkt zu messen, wertet das erfindungsgemäße Verfahren indirekt die der Echolaufzeit gleiche Verzögerungszeit zwischen dem ersten Sendepuls und dem Eintreffen des ersten Echosignals innerhalb eines kohärent verarbeiteten Blocks aus.

Die Erfindung ist daher von besonderem Vorteil für Flugzeug-Bordradare, die zur Erschwerung gegnerischer Störmaß-nahmen frequenzagil sind und nur sehr kurze Zeit auf einer Sendefrequenz verweilen. Der häufige und schnelle Frequenzwechsel, der auf den ersten Blick eher störend für die Signal- bzw. Spektralanalyse erscheint, wirkt sich bei Anwendung des erfindungsgemäßen Verfahrens dadurch vorteilhaft aus, daß nach jedem Frequenzwechsel in dem neuen Kanal die Signallaufzeit gemessen werden kann und somit eine Vielzahl von Informationen zur Entfernungsbestimmung vorliegen.

Eine besonders vorteilhafte Weiterbildung der Erfindung sieht vor, innerhalb einer Radaranlage mehrere Sende-Empfangseinrichtungen frequenzagil gleichzeitig auf verschiedenen Frequenzen so zu betreiben, daß die Frequenzumschaltzeitpunkte für die mehreren Einrichtungen zeitlich gestaffelt sind. Die insgesamt benutzten Kanäle können zusammen ein breites Frequenzband abdecken, so daß ein hohes Maß an Störresistenz erreicht wird.

Die Erfindung ist nachfolgend unter Bezugnahme auf die Zeichnungen noch eingehend erläutert. Dabei zeigt:

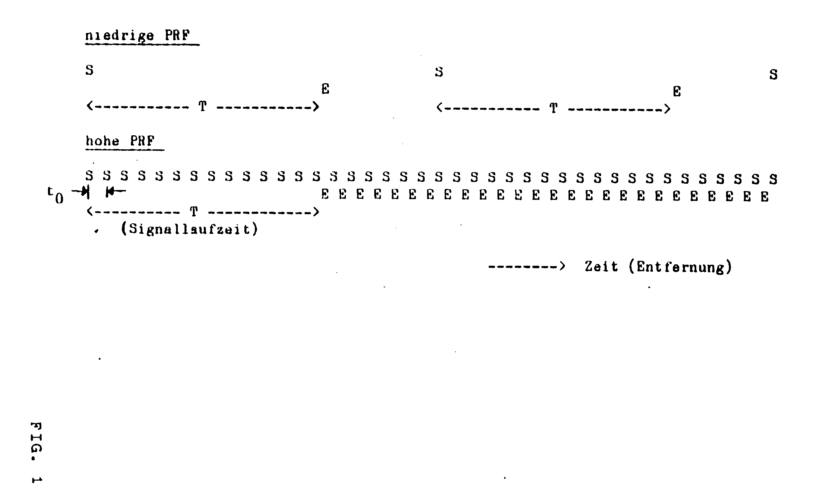

FIG. 1 einen Vergleich der Sende-/Empfangs-Impulsfolge für LPRF und HPRF

FIG. 2 das Betragsspektrum eines in den Frequenzbereich transformierten Signals

          A: ohne zusätzliche Faltung (Reckteck Zeitfenster)

          B: mit zusätzlicher Faltung (Blackman Zeitfenster)

FIG. 3 das Betragsspektrum eines in den Zeitbereich rücktransformierten Signals

FIG. 4 die zeitliche Staffelung der verschiedenen Verfahrensschritte anhand eines Blockschaltbilds.

Bei einem Bodenradar mit niedriger PRF und hoher Pulsleistung besteht eine eindeutige Zuordnung zwischen Sendeimpuls S und dem um die Signallaufzeit T verzögerten Echopuls E. Das abgetastete Echosignal kann direkt einer oder mehreren Entfernungszellen zugeordnet werden.

Wenn bei einem Pulsradar mit hoher PRF auf eine neue Frequenz geschaltet wird, so können bis zum Eintreffen des ersten Echopulses E bereits eine Vielzahl von Sendepulsen S ausgesandt worden sein. Bei einer Zielentfernung von 150 km beträgt die Signallaufzeit T rund 1 ms, so daß bei einer PRF von 200 kHz die ersten Echos erst nach dem zweihundertsten Sendepuls empfangen werden.

Die Signallaufzeit T kann aber bei einem HPRF-Radar wegen des i. a. sehr kleinen S/N- bzw. S/C-Verhältnisses nicht direkt gemessen werden. Die Erfindung nutzt daher die durch die zeitliche Verzögerung des Echos (Signallaufzeit T) entstehende Amplitudenmodulation in dem jeweiligen Empfangskanal aus und leitet daraus in der nachfolgend beschriebenen Weise einen Schätzwert für die Zielentfernung ab.

Der Einfachheit halber ist im folgenden nur die kohärente Verarbeitung eines Blocks mit einheitlicher Sendefrequenz und PRF als Ausschnitt aus dem frequenzagilen Betrieb mit mehreren parallelen Sende-Empfangs-Einrichtungen näher beschrieben. Bei einer Pulsfolgefrequenz von beispielsweise 200 kHz und einer Blocklänge von 1024 kohärent integrierten Abtastwerten (jeweils ein Abtastwert zwischen zwei Sendeimpulsen) ergibt sich die Verweilzeit B auf einem Frequenzkanal zu rund 5 ms. Das Nutzsignal s(t) innerhalb eines einzelnen solchen Kanals wird einerseits durch eine amplitudenmodulierte und andererseits als dopplerfrequenzmodulierte komplexe Schwingung in dem Beobachtungsintervall (O, B) beschrieben:

$$s(t) = \begin{cases} 0 & \text{für } 0 < t < T \\ e^{i \cdot 2\widetilde{\pi} \cdot f_D \cdot t} & \text{für } T < t < B \end{cases}$$

Das Echosignal e(t) ergibt sich aus der Überlagerung des Nutzsignals mit einem Störsignal (Clutter) c-(t)

e(t) = s(t) + c(t).

3

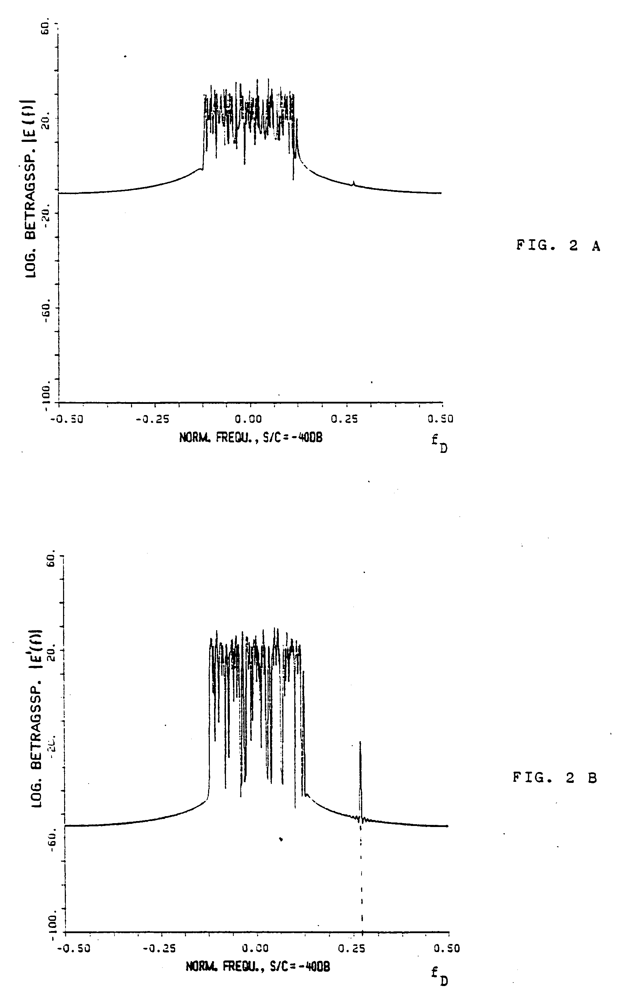

Das komplexe Signal e(t) liegt nach Abtastung des Empfängerausgangssignals in einem I- und einem Q-Kanal in Form von 1024 komplexen Abtastwerten vor. Dieses komplexe Signal e(t) wird zunächst, z. B. mittels einer FFT, aus dem Zeitbereich in ein komplexes Spektrum E(f) im Frequenzbereich transformiert und gespeichert. Zur Verbesserung der Zielentdeckung im Betragsspektrum von E(f) kann vorteilhafterweise das transformierte komplexe Spektrum E(f) mit wenigen reellen Koeffizienten gefaltet werden, was einer Wichtung im Zeitbereich mit z. B. einem Hamming-oder einem Blackman-Fenster entspricht. Die entsprechenden Grundlagen für eine solche Wichtung sind an sich bekannt und z. B. in /2/ oder /3/ beschrieben. FIG. 2 zeigt das Betragsspektrum eines Echosignals, in dem ein Nutzsignal mit einem S/C-Verhältnis von -40 dB und einer normierten Dopplerfrequenz von $f_D$ = 0,27 enthalten ist, ohne Faltung des fouriertransformierten Spektrums (FIG. 2A) und nach Faltung des komplexen Spektrums mit den Koeffizienten 0,04, -0,25, 0,42, -0,25, 0,04, was identisch ist mit der Anwendung des Blackman-Fensters im Zeitbereich (FIG. 2B).

Das in FIG. 2, vorzugsweise 2B, skizzierte Betragsspektrum wird zur Zielentdeckung benutzt, indem der Ziel-Spektralkanal beispielsweise durch eine gleitende CFAR-Verarbeitung ermittelt wird. Die dem Zielkanal zugeordnete Dopplerfrequenz wird gleichfalls gespeichert, womit die Zielentdeckung abgeschlossen ist. Es ist leicht ersichtlich, daß auf diese Wiese auch Mehrzielsituationen auflösbar sind.

In einem nächsten Verarbeitungsschritt wird die Amplitudenmodulation des Nutzsignals ermittelt und damit die Bestimmung der gesuchten Signallaufzeit T bzw. der Zielentfernung R vorbereitet. Dazu steht das gespeicherte komplexe Spektrum E(f) und die Dopplerinformation des Ziels zur Verfügung.

Hierzu wird das komplexe Spektrum E(f) mit einer Bandpaßfunktion W(f), deren Mittenfrequenz bei der zuvor ermittelten und gespeicherten Dopplerfrequenz $f_D$ des Ziels liegt, multipliziert und das Produkt, z. B. wieder mit Hilfe einer FFT, in ein komplexes Signal g(t) im Zeitbereich rücktransformiert. Die Bandpaßfunktion W(f) für die jeweiligen Dopplerfrequenzen des Ziels können entweder jeweils nach Maßgabe der Ziel-Dopplerfrequenz neu berechnet werden (siehe z. B. /4/) oder bereits abgespeichert vorliegen.

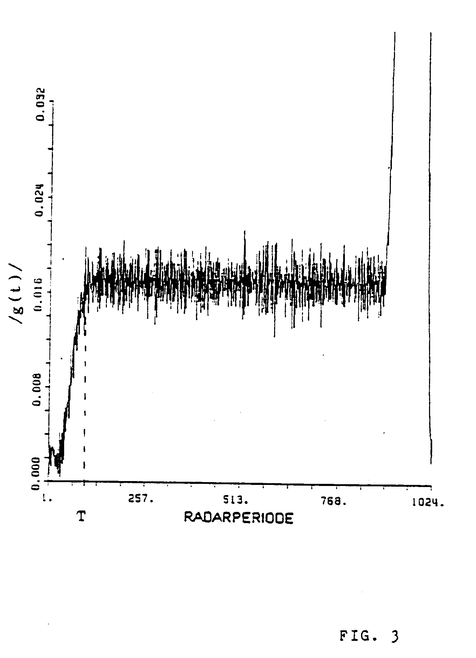

FIG. 3 zeigt das durch Multiplikation des komplexen Spektrums E(f) aus FIG. 2A mit einer Bandpaßfunktion W(f), die einem Filter mit ca. 3 kHz Bandbreite und einem Nebenzipfelabstand von -60 dB entspricht, und nachfolgender Fouriertransformation in den Zeitbereich entstandene zeitabhängige Signal g(t) in Betragsform. Als Zeitmaßstab ist die Nummer der Radarperioden des kohärent verarbeiteten Blocks angegeben.

Das Signal g(t) zeigt drei für die Auswertung wesentliche Bereiche.

I. Zu Beginn ist die Intensität gering, was dem Fehlen von Nutzsignalanteilen entspricht.

II. Danach folgt ein im wesentlichen linearer Anstieg, der als Einschwingvorgang während der Verschiebung des Bandpasses in den Nutzsignalbereich interpretiert werden kann.

III. Im eingeschwungenen Zustand des Bandpasses bleibt die Intensität außer statistischen Schwankungen weitgehend gleich.

Der starke Anstieg am Ende des Zeitsignals enthält keine Information aus dem Empfangsignal, sondern ist lediglich eine Folge der komplexen Transformationen (zyklische Faltung) und der Filterung und daher für die Signalanalyse ohne Bedeutung.

Die gesuchte Signallaufzeit T wird bei dem erfindungsgemäßen Verfahren aus dem Beginn des eingeschwungenen Filterzustandes, d. h. dem oberen Ende der Anstiegsflanke, geschätzt. Hierzu wird der Erwartungswert des Betragssignals g(t) im Bereich des eingeschwungenen Filterzustandes geschätzt, das Betragssignal geglättet und mit dem geschätzten Erwartungswert als Schwellwert verglichen. Der Zeitpunkt, an dem der Erwartungswert zum ersten Mal überschritten wird, wird als Schätzung der Signallaufzeit betrachtet und daraus die Zielentfernung berechnet. Trotz des bei dem Beispiel angenommenen schlechten S/C-Verhältnisses von -40 dB ist im Betragssignal in FIG. 3 der Beginn des eingeschwungenen Zustandes deutlich zu erkennen.

Der über die bloße Zielentdeckung hinausgehende zusätzliche Signalverarbeitungsaufwand ist nicht hoch. Die zusätzlichen Verarbeitungsschritte zur Entfernungsmessung fallen insbesondere nur dann an, wenn eine Zieldetektion auftritt.

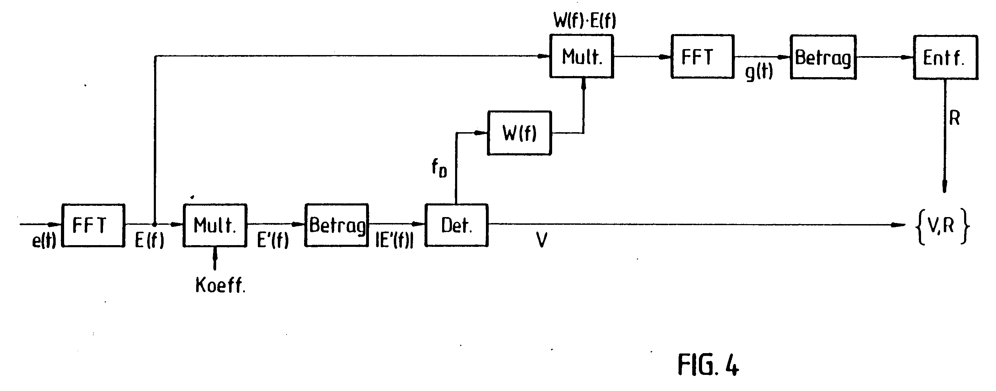

In FIG. 4 ist anhand eines Blockschaltbildes die Aufeinanderfolge der einzelnen Verfahrensschritte veranschaulicht. Das komplexe Zeitsignal e(t), das nach einem kohärenten Verarbeitungsintervall am Empfängerausgang zur Verfügung steht, wird mittels einer FFT-Prozedur in ein komplexes Spektrum E(f) im Frequenzbereich transformiert. Dieses komplexe Spektrum wird mit einer Wichtung im Zeitbereich entsprechenden Koeffizienten multipliziert. In einem nächsten Schritt wird aus dem komplexen Spektrum das Betragsspektrum gebildet, das die Grundlage für die nachfolgende Zielentdeckung (Det.) bildet. Bei der Zielentdeckung wird neben dem Vorliegen eines Ziels auch dessen Dopplerfrequenz $f_D$ bzw. Geschwindigkeit v ermittelt und ausgegeben. Soweit entspricht das Verfahren noch Signalverarbeitungsverfahren für HPRF-Radare ohne Entfernungsmessung und bedeutet daher noch keinen zusätzlichen Aufwand.

4

Lediglich bei Auftreten eines Ziels beim Verfahrensschritt der Zielentdeckung (Det.) wird das Verfahren zur Ermittlung der Zielentfernung weitergeführt. Hierzu wird nach Maßgabe der ermittelten Dopplerfrequenz $f_D$ des Ziels eine komplexe Filterfunktion W(f) berechnet oder aus gespeicherten Filterfunktionen ausgewählt. Das zuvor bereits zur Zielentdeckung durch Transformation aus dem Zeitsignal e(t) entstandene und zwischengespeicherte komplexe Spektrum E(f) wird mit der Filterfunktion W(f) multipliziert und das Produkt wird mittels einer erneuten Fouriertransformation (FFT$^{-1}$) vom Frequenzbereich in ein komplexes Zeitsignal g(t) in den Zeitbereich rücktransformiert. Nach Betragsbildung ergibt sich ein Signal der in FIG. 3 skizzierten Art, aus dessen Anstiegsflanke in der beschriebenen Art die Echolaufzeit T und damit die Zielentfernung R geschätzt werden können (Entf.), womit die gesuchten Größen der Zielentfernung und der Zielgeschwindigkeit vorliegen.

Aus der Blockskizze in FIG. 4 wird auch deutlich, daß für die über die Zielentdeckung hinausgehenden Verfahrensschritte zur Entfernungsmessung weitgehend auf die ohnehin zur Zielentdeckung erforderlichen Prozeduren zurückgegriffen werden kann und die entsprechenden Einrichtungen, z. B. Prozessoren, für Multiplikation, Fouriertransformation und Betragsbildung auch im Zeitmultiplex zum einen für die Zielentdeckung, zum anderen für die Entfernungsbestimmung genutzt werden können,

Eine besonders vorteilhafte Weiterbildung der Erfindung sieht vor, mittels mehrerer, gleichzeitig auf verschiedenen Frequenzen frequenzagil betreibbarer Send- Empfangs-Einrichtungen innerhalb einer Radaranlage gleichzeitig auf verschiedenen Frequenzkanälen aus einer Vielzahl von Kanälen innerhalb eines Frequenzbereichs zu senden und zu empfangen und dabei die Frequenzumschaltzeitpunkte der verschiedenen Einrichtungen zeitlich zu staffeln. Eine solche Vorgehensweise führt zu hoher Störresistenz bei gleichzeitig hoher Zielentdeckungwahrscheinlichkeit, da damit gerechnet werden kann, daß nicht alle Kanäle gleichzeitig gestört werden können und immer wenigstens ein Kanal mit ausreichendem Störabstand für die Zielentdeckung und Entfernungsmessung zur Verfügung steht. Bei Zielmeldungen in mehreren Kanälen kann der Kanal mit dem besten Signal-Rausch-Verhältnis zur weiteren Verarbeitung ausgewählt werden. Die Verarbeitungsgeschwindigkeit verfügbarer Prozessoren sind so hoch, daß alle Empfangskanäle mit denselben Einrichtungen im Zeitmultiplex verarbeitet werden können und - zur Doppelausnutzung einiger Verarbeitungsstufen (FFT, Mult., Betrag) für Zielentdeckung und Entfernungsschätzung - auch noch ein Zeitfenster für die Entfernungsschätzung in einem Kanal freigehalten werden kann.

Literatur

/1/ Hovanessian, S.A.; Medium PRF Performance Analysis,
IEEE-AES-18, No. 3 (May 1982), pp 286-296
/2/ Nuttall, A.H., Some Windows with very good Sidelobe Behavior,
IEEE-ASSP-29, No. 1, Febr. 1981, pp 84-91
/3/ Rohling, H., Schürmann, J.,
Discrete Time Window Functions with Arbitrarily low Sidelobe Level, Signal Processing 5 (1983), pp 127-138
/4/ Oppenheim, A.V., Schafer, R.W.,
Digital Signal Processing, Prentice- Hall, 1975

**Patentansprüche**

1. Verfahren zur Entfernungsmessung bei einem Pulsdopplerradar hoher Pulsfolgefrequenz mit eindeutiger Messung der Geschwindigkeitsinformation eines Ziels aus dessen Dopplerfrequenz, bei welchem ein aus einer Mehrzahl aufeinanderfolgender Echosignale gebildeter Signalblock kohärent verarbeitet wird, wobei aus dem komplexen Empfangssignal des Signalblocks durch Transformation aus dem Zeitbereich in den Frequenzbereich ein komplexes Spektrum gebildet wird, dadurch gekennzeichnet, daß das komplexe Spektrum E(f) mit einer komplexen Bandpaßfunktion W(f), deren Mittenfrequenz bei der Dopplerfrequenz ($f_D$) des Ziels liegt, multipliziert und das Produkt in ein Zeitsignal g(t) rücktransformiert wird und daß aus der Anstiegsflanke des Betrags des Zeitsignals g(t) ein Schätzwert für die Zielentfernung gewonnen wird.

2. Verfahren nach Anspruch 1, dadurch gekennzeichnet, daß für den der Anstiegsflanke folgenden Bereich des Zeitsignals g(t) ein Erwartungswert gebildet und als Schwellwert für das Zeitsignal g(t) herangezogen wird, und daß das erstmalige Überschreiten des Schwellwerts als Schätzwert für die Echolaufzeit T genommen wird.

3. Verfahren nach Anspruch 2, dadurch gekennzeichnet, daß das Zeitsignal vor dem Vergleich mit dem Schwellwert geglättet wird.

4. Verfahren nach Anspruch 1, dadurch gekennzeichnet, daß die Zielentdeckung anhand des Betrags des komplexen Spektrums E(f) vorgenommen wird.

5. Verfahren nach Anspruch 4, dadurch gekennzeichnet, daß vor der Einrichtung zur Zielentdeckung eine Nebenzipfelabsenkung im komplexen Spektrum E(f) durch Faltung mit einem Koeffizientensatz vorgenommen wird, was einer Wichtung im Zeitbereich entspricht.

6. Verfahren nach einem der Ansprüche 1 bis 5, dadurch gekennzeichnet, daß das Pulsradar frequenzagil betrieben wird und daß nach Aussenden der Sendepulse eines Blocks mit einheitlicher Pulsfolgefrequenz Sender und Empfänger auf eine neue Frequenz umgeschaltet werden.

7. Verfahren nach Anspruch 6, dadurch gekennzeichnet, daß mittels mehrerer frequenzagiler Sende-Empfangs-Einrichtungen auf mehreren verschiedenen Frequenzen gleichzeitig gesendet und empfangen wird und daß die Frequenzumschaltzeitpunkte der mehreren Einrichtungen zeitlich gestaffelt sind.

8. Verfahren nach Anspruch 7, dadurch gekennzeichnet, daß die Empfangssignale der mehreren verschiedenen Sende-Empfangs-Einrichtungen im Zeitmultiplex in gemeinsamen Auswerteeinrichtungen verarbeitet werden.

9. Verfahren nach Anspruch 7 oder Anspruch 8, dadurch gekennzeichnet, daß für die Empfangssignale der verschiedenen Sende-Empfangs-Einrichtungen jeweils das Signal-Rausch-Verhältnis bestimmt wird und nur für die Signale mit dem besten Signal-Rausch-Verhältnis eine Signalauswertung zur Entfernungsmessung durchgeführt wird.

**Claims**

1. Method for measurement of distance in a Doppler pulse radar of high pulse repetition frequency with unambiguous measurement of the speed information of a target from its Doppler frequency, in which method a signal block formed of a plurality of successive echo signals is processed coherently, wherein a complex spectrum is formed from the complex received signal of the signal block by transformation out of the time region into the frequency region, characterised thereby, that the complex spectrum E(f) is multiplied by a complex band-pass function W(f), the centre frequency of which lies at the Doppler frequency ($f_D$) of the target, and the product is transformed back into a time signal g(t) and that an estimated value of the target distance is obtained from the rising edge of the amplitude of the time signal g(t).

2. Method according to claim 1, characterised thereby, that an expected value is formed for that region of the time signal g(t), which follows the rising edge, and is drawn upon as threshold value for the time signal g(t) and that the first exceeding of the threshold value is accepted as estimated value of the echo transit time T.

3. Method according to claim 2, characterised thereby, that the time signal is smoothed before the comparison with the threshold value.

4. Method according to claim 1, characterised thereby, that the target discovery is undertaken with the aid of the amplitude of the complex spectrum E(f).

5. Method according to claim 4, characterised thereby, that a side lobe attenuation is undertaken in the complex spectrum E(f) by folding with a set of co-efficients before the equipment for the target discovery, which folding corresponds to a weighting in the time region.

6. Method according to one of the claims 1 to 5, characterised thereby, that the pulse radar is operated at variable frequency and that the transmitter and the receiver are switched over to a new frequency after emission of the transmitted pulses of a block of uniform repetition frequency.

**7.** Method according to claim 6, characterised thereby, that transmitting and receiving is done simultaneously on several different frequencies by means of several transmitting-receiving equipments of variable frequency and that the instants of switch-over of frequency of the several equipments are staggered in time.

**8.** Method according to claim 7, characterised thereby, that the received signals of the several different transmitting-receiving equipments are processed in time multiplex in common evaluating equipments.

**9.** Method according to claim 7 or 8, characterised thereby, that the respective signal-to-noise ratio is ascertained for each of the received signals of the different transmitting-receiving equipments and a signal evaluation for the measurement of distance is performed only for the signals with the best signal-to-noise ratio.

**Revendications**

**1.** Procédé de mesure de distance dans un radar à impulsions à haute fréquence de répétition d'impulsions, avec mesure univoque de l'information de vitesse d'une cible à partir de sa fréquence Doppler, selon lequel un bloc de signaux formé d'une pluralité de signaux d'écho successifs est traité de façon cohérente, avec formation d'un spectre complexe d'après le signal de réception complexe du bloc de signaux par transformation à partir du domaine temporel dans le domaine fréquentiel, caractérisé en ce que le spectre complexe E(f) est multiplié par une fonction de filtre passe-bande complexe $\overline{W(f)}$ dont la fréquence centrale correspond à la fréquence Doppler ($f_D$) de la cible et le produit est retransformé en un signal temporel g(t), et qu'une valeur estimée pour la distance de la cible est obtenue à partir du flanc de montée de la valeur absolue du signal en fonction du temps g(t).

**2.** Procédé selon la revendication 1, caractérisé en ce qu'une valeur prévisionnelle est formée pour la partie du signal temporel g(t) succédant au flanc de montée, valeur qui est utilisée comme seuil pour le signal temporel g(t), et que le premier dépassement du seuil est pris en considération pour la valeur estimée du temps de propagation de l'écho T.

**3.** Procédé selon la revendication 2, caractérisé en ce que le signal temporel est lissé avant sa comparaison avec le seuil.

**4.** Procédé selon la revendication 1, caractérisé en ce que la détection de cible est effectuée d'après la valeur absolue du spectre complexe E(f).

**5.** Procédé selon la revendication 4, caractérisé en ce que, avant le dispositif pour la détection de cible, un abaissement des lobes secondaires dans le spectre complexe E(f) est opéré par convolution avec un jeu de coefficients, ce qui correspond à une pondération dans le domaine temporel.

**6.** Procédé selon une des revendications 1 à 5, caractérisé en ce que le radar à impulsions est utilisé avec agilité en fréquence et que, après l'envoi des impulsions d'émission d'un bloc à fréquence de répétition d'impulsions uniforme, l'émetteur et le récepteur sont commutés sur une nouvelle fréquence.

**7.** Procédé selon la revendication 6, caractérisé en ce que, au moyen de plusieurs dispositifs d'émission-réception agiles en fréquence, des émissions et des réceptions sont effectuées simultanément sur plusieurs fréquences différentes et que les instants de commutation des fréquences des différents dispositifs sont échelonnés dans le temps.

**8.** Procédé selon la revendication 7, caractérisé en ce que les signaux de réception des différents dispositifs d'émission-réception sont traités en multiplexage temporel dans des dispositifs d'exploitation collectifs.

**9.** Procédé selon la revendication 7 ou 8, caractérisé en ce que le rapport signal/bruit est déterminé pour les signaux de réception des différents dispositifs d'émission-réception et qu'une exploitation de signaux est effectuée seulement, en vue de la mesure de la distance, pour les signaux ayant le meilleur rapport signal/bruit.

niedrige PRF

S                                        S                                    S

                         E                                          E

<----------- T ----------->                 <----------- T ----------->

hohe PRF

S S S S S S S S S S S S S S S S S S S S S S S S S S S S S S S S S S S S S S S S S S

$t_0$ ->| |<-           E E E E E E E E E E E E E E E E E E E E E E E E E E E E E E E E E E

     <---------- T ----------->

    (Signallaufzeit)

                                      -------->   Zeit (Entfernung)

FIG. 1

EP 0 223 129 B1

FIG. 2 A

FIG. 2 B

FIG. 3

EP 0 223 129 B1

e(t) → FFT → E(f) → Mult. → E'(f) → Betrag → |E'(f)| → Det. → V → {V,R}

Koeff.

$f_D$

W(f)

W(f)·E(f)

Mult. → FFT → g(t) → Betrag → Entf. → R

FIG. 4